# EUROPEAN PATENT APPLICATION

(11) **EP 0 978 999 A2**
(43) Date of publication of application: **09.02.2000**
(21) Application number: 99115578.9
(22) Date of filing: 06.08.1999
(51) Int. Cl.: H04N 5/00, H04N 7/00

(54) **Television program broadcasting system**

(30) Priority: 07.08.1998 JP 23485698; 01.06.1999 JP 15391599
(71) Applicant: MATSUSHITA ELECTRIC INDUSTRIAL CO., LTD., Kadoma-shi, Osaka 571-8501 (JP)
(72) Inventor: Soma, Kenji, Tokyo 157-0071 (JP); Takeuchi, Yoshiyasu, Tokyo 144-0046 (JP); Nagao, Takeshi, Kawaguchi-shi, Saitama 332-0012 (JP)
(74) Representative: Kügele, Bernhard

(57) **Abstract**

In a program broadcasting system for multiplexing and broadcasting TV-program data and program guide information, the constitution comprises a program frame creating unit 32 for creating a program frame of program guide information from program element transmitting schedule of program elements for composing a program, and a frame creating rule storage unit 34 for storing the rule for creating the program frame of program guide information, in which the program frame creating unit creates automatically the program frame according to the rule stored in the frame creating rule storage unit. It hence can automatically create the program frame which is most important for creating program guide information.

## Description

### Field of the Invention

The present invention relates to a television(TV)-program broadcasting system which program guide information is broadcast as being multiplexed on the TV-program data composed of video-audio data of the program. More particularly, the invention is intended to create program guide information automatically, and change the program guide information immediately when the television on-air schedule of TV-program data is changed.

### Background of the Invention

Digital broadcasting can present much more channels than analog broadcasting. The number of TV-programs is increased outstandingly in digital broadcasting as compared with analog broadcasting.

When the number of TV-programs is too many, the viewer is busy in selecting desired programs and tuning channels. In digital broadcasting, however, program guide information showing the outline of the program is broadcast as being multiplexed on the TV-program data composed of video-audio data of the program. Therefore, according to this program guide information, the viewer can tune the channel directly or reserve video recording by referring to the program list in the electronic program guide (EPG) displayed on the screen of the receiver.

Also in digital broadcasting, programs can be organized flexibly, for example, by broadcasting a standard definition TV-program (SDTV) in a certain time zone and a high definition TV-program (HDTV) in other time zone.

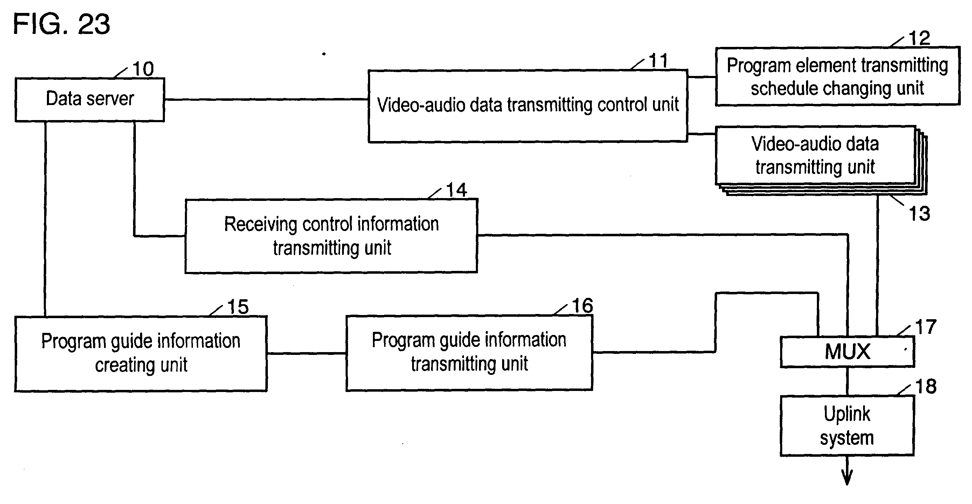

A conventional program broadcasting system is shown in Fig. 23.

A conventional program broadcasting system comprises:
(a) a data server 10 for holding and managing program element transmitting schedule of TV-program data and program information,
(b) a video-audio data transmitting control unit 11 for controlling transmission of TV-program data according to the program element transmitting schedule,
(c) a video-audio data transmitting unit 13 storing video and audio data of programs,
(d) a program element transmitting schedule changing unit 12 for changing the program element transmitting schedule,
(e) a receiving control information transmitting unit 14 for transmitting information necessary for channel tuning (receiving control information),
(f) a program guide information creating unit 15 for processing program guide information into a specified format,
(g) a program guide information transmitting unit 16 for transmitting program guide information section data processed in this format consecutively at certain time intervals,
(h) a multiplexer (MUX) 17 for multiplexing TV-program data, receiving control information, and program guide information, and
(i) an uplink system 18 for transmitting multiplexed data.

In this system, the data server 10 stores and manages
(a) program element transmitting schedule of TV-program data,
(b) receiving control information, and
(c) program information
   that correspond to program element identifiers (identifiers for identifying the elements for composing the program).

The program element transmitting schedule is a record of start time and end time of each element (program, CM), showing when the program starts and when the program ends.

The receiving control information is the information necessary for tuning the channel at the receiver side, such as whether the program is HDTV format or SDTV format.

The TV-program data (video, audio) is recorded in the video-audio data transmitting unit 13. The video-audio transmitting control unit 11 acquires the program element transmitting schedule (for example, the unit of one day) having the program element identifier stored in the data server 10. The video-audio data transmitting control unit 11 instructs the output of TV-program data having the same program element identifier to the video-audio data transmitting unit 13 according to the program element transmitting schedule.

The receiving control information transmitting unit 14 acquires the receiving control information and the corresponding program element transmitting schedule from the data server 10, and processes the receiving control information into a specified format. This receiving control information transmitting unit 14 transmits the receiving control information section data by synchronizing with the program to be on-air. Herein, the receiving control information section data is the receiving control information processed into a specified format.

The quantity of data of program guide information transmitted in multiplexed format is not limitless. The quantity of data that can be transmitted is determined so as to be sent out below a specified transmission speed. Accordingly, when creating the program guide information, the quantity of data is adjusted so as to be sent out below the specified transmission speed. Thus created program guide information is stored in the data server 10.

The program guide information creating unit 15 acquires the program guide information at every specified time from the data server 10, and processes it into a specified format. Herein, the program guide information creating unit 15 provides the processed program guide information section data with version number, and sends out into the program guide information transmitting unit 16.

The program guide information transmitting unit 16 sends out the program guide information section data entered from the program guide information creating unit 15 by repeating at specific time intervals.

The TV-program data, receiving control information and program guide information are multiplexed in the MUX 17, and transmitted from the uplink system 18.

The receiving control information transmitting unit 14 and program guide information transmitting unit 16 are composed of two units each in duplex so that transmitting data may not be interrupted. Therefore, if one unit fails, the other unit substitutes.

The receiver stores the program guide information received right after start of reception, and displays it on the screen according to the operation by the viewer. The program guide information creating unit 15 of the program broadcasting system creates, upon lapse of a specified time, updated program guide information section data by incrementing the version number by one. The updated program guide information section data is sent out repeatedly through the program guide information transmitting unit 16.

The receiver, when receiving the program guide information section data of a new version number adding one to the present acquired version number, updates the held program guide information, and does not update the program guide information section data if other version number is given.

When changing the program element transmitting schedule due to extension of on-air time for a baseball game program, for example, the program element transmitting schedule held in the video-audio data transmitting control unit 11 is changed by the operation of the program element transmitting schedule changing unit 12. The video-audio data transmitting control unit 11 controls transmission of video and audio data from the video-audio data transmitting unit 13 according to the new program element transmitting schedule. This change information of the program element transmitting schedule is also transmitted from the video-audio data transmitting control unit 11 into the data server 10. As a result, the program element transmitting schedule and receiving control information stored in the data server 10 are updated.

The change notice of the program element transmitting schedule is transmitted from the data server 10 to the receiving control information transmitting unit 14 and program guide information creating unit 15. The receiving control information transmitting unit 14 updates the receiving control information section data, and the program guide information creating unit 15 updates the program guide information section data.

Incidentally, the program element transmitting schedule can be also changed by changing the data managed by the data server 10.

A typical example of the program guide information mentioned above is standardized by DVB/SI standard (EST 300468 Digital broadcasting system for television, sound and data services; Specification for Service Information (SI) in Digital Video Broadcasting (DVB) systems (1998-2)).

A typical example of the receiving control information mentioned above is standardized by MPEG2 (ISO/IEC13818-1 Information technology - Generic coding of moving pictures and associated audio information; Systems (1996)).

However, the conventional program broadcasting system had the following problems.

In the conventional system, the program guide information is all created by man, and it takes time and labor. In particular, in order to send out the program guide information below a specified transmission speed, the job is complicated and it is time-consuming. Such job can be automated, the job load is significantly alleviated.

If the program element transmitting schedule is changed, the program guide information creating unit 15 creates new program guide information section data. It hence takes time until the data is sent out. In particular, when changed in the video-audio data transmitting control unit 11, the changed information is sent from the video-audio data transmitting control unit 11 to the data server 10. After the data in the data server 10 is updated, the program guide information creating unit 15 creates new program guide information section data. The new program guide information section data is issued to the MUX 17 through the program guide information transmitting unit 16. It hence takes a very long time to process when the program element transmitting schedule is changed. When the program guide information section data conforms to the DVB/SI standard, the present/next event information of the event information table (EIT) being presently on-air may be different from the content of the TV-program data (video, audio) being presently on-air.

Or when transferring program guide information section data with version number from the program guide information creating unit 15 to the duplexed program guide information transmitting unit 16, in case of failure of transfer to the other unit due to network trouble or the like, the version numbers of the transmitted program guide information section data may not be serial. If the version numbers are not serial, the receiver designed to update the program guide information in the sequence of version numbers may not update the program guide information.

The invention is intended to solve such conventional problems, and it is hence an object thereof to present a program broadcasting system
(a) capable of automating the program guide information creating procedure,
(b) capable of quickly reacting to the change of program element transmitting schedule, and
(c) capable of preventing occurrence of discontinuous version numbers in the program guide information section data to be transmitted.

### Summary of the Invention

The program broadcasting system of the invention comprises a program frame creating unit for creating a program frame of program guide information from the program element transmitting schedule for composing the program, and a frame creating rule storage unit for storing the program frame creating rule of program guide information. The program frame creating unit creates a program frame according to the rule stored in the frame creating rule storage unit.

Herein, the program frame is a frame for a program list for presenting program guide information such as the television program guide of newspaper.

The frame creating rule storage unit may also stored the rule for creating the program frame according to the boundary information of the program frame and next program frame.

The program broadcasting system of the invention can automate creation of program frame when creating program guide information.

The program guide information transmitting unit manages by dividing into the program guide information section data and transmitting schedule. When the video-audio data transmitting control unit changes the program element transmitting schedule, the program guide information transmitting unit notices only the program element identifier and the changed program element transmitting schedule to the program guide information transmitting unit.

Accordingly, when the program element transmitting schedule is changed in the video-audio data transmitting control unit, the program guide information transmitting unit obtains the changed program element transmitting schedule, and promptly changes the transmitting schedule of the program guide information section data. It hence prevents failure in synchronization of the program data and program guide information.

When plural program guide information transmitting units exchange information of version numbers attached to program guide information section data, and the version number of the partner side is larger, it is designed to update continuously until the version number of the program guide information section data transmitted coincides with the version number of the partner side.

Accordingly, if disagreement of version numbers should occur, the version numbers of the plural program guide information transmitting units are automatically corrected.

A first aspect of the invention relates to a constitution of a program broadcasting system for multiplexing and broadcasting TV-program data and program guide information comprising:
(a) a program frame creating unit for creating a program frame of program guide information from one or more program element transmitting schedules for composed a program, and
(b) a frame creating rule storage unit for storing the rule for creating the program frame of program guide information.

The program frame creating unit creates the program frame according to the rule stored in the frame creating rule storage unit, and therefore the system of the invention can automatically create the program frame which is most important for creating program guide information.

A second aspect of the invention relates to a constitution comprising:
(a) program guide information processing unit for processing program guide information so as to be sent out below a specified transmission speed, and
(b) a program guide information processing rule storage unit for storing the rule for processing the program guide information.

The program guide information processing unit processes the program guide information so that the program guide information may be sent out below a specified transmission speed according to the rule stored in the program guide information processing rule storage unit.

Therefore, the system of the invention can automate the job for decreasing the quantity of data of program guide information, hitherto done by the input operator of program guide information, so as to send out below a specified transmission speed.

A third aspect of the invention relates to a constitution comprising:
(a) a data server for storing program element transmitting schedule and program information corresponding to each other by program element identifier, in a program broadcasting system for multiplexing and broadcasting TV-program data and program guide information,
(b) a program guide information creating unit for creating program guide information and transmitting schedule of program guide information corresponding to each other by event identifier, from the program element transmitting schedule and program information, and
(c) a program guide information transmitting unit for managing program guide information and transmitting schedule individually, and sending out the corresponding program guide information according to the transmitting schedule.

When the on-air time of a program is changed, the program guide information transmitting unit obtains the updated transmitting schedule, and sends out the program guide information section data corresponding to the change of the on-air time.

A fourth aspect of the invention relates to a constitution comprising:
(a) a program guide information creating unit for creating program guide information section and transmitting schedule of this program guide information section corresponding to each other by program element identifier, in a program broadcasting system for multiplexing and broadcasting TV-program data and program guide information,
(b) a program guide information transmitting unit for managing program guide information section and transmitting schedule independently, storing the version number indicating updating of contents of program guide information section, picking up a program guide information section having the same program element identifier according to the transmitting schedule, adding version number, and sending out repeatedly, and
(c) a stream switching unit for switching the output of the program guide information transmitting unit,
(d) wherein the program guide information transmitting unit is duplexed.

Duplexed program guide information transmitting units mutually exchange the version numbers to be given to the program guide information section. When the version number of the program guide information transmitting unit at the partner side is larger than the version number given by the program guide information transmitting unit of the own side, the program guide information transmitting unit of the own side continues to update the version number to be given to the program guide information section until coinciding with the version number of the program guide information transmitting unit of the partner side. As a result, if there is disagreement in the version numbers given to the program guide information by the duplexed program guide information transmitting units, the system of the invention can automatically correct the disagreement of the version numbers.

### Brief Description of the Drawings

Fig. 1 is a block diagram showing a constitution of a program broadcasting system in an embodiment of the invention.
Fig. 2A is a flowchart for explaining the frame creating rule of a program broadcasting system in embodiment 1.
Fig. 2B is a diagram showing an example of boundary information of program frame and next program frame.
Fig. 3 is a diagram showing an example of program element transmitting schedule.
Fig. 4 is a diagram showing an example of program element transmitting schedule provided with an event ID.
Fig. 5 is a diagram showing an example of program guide information transmitting schedule.
Fig. 6 is a diagram showing a correspondence table of program element identifier and event ID.
Fig. 7 is a diagram showing an example of program guide information section data.
Fig. 8 is a flow diagram showing the operation at the time of urgent change of program element transmitting schedule in a program broadcasting system in embodiment 2.
Fig. 9 is a flow diagram showing an ordinary operation of a program guide information creating unit in the program broadcasting system in embodiment 2.
Fig. 10 is a flow diagram showing an ordinary operation of the program guide information creating unit in the program broadcasting system in embodiment 2.
Fig. 11 is a flow diagram showing the operation at the time of urgent change of program element transmitting schedule in the program guide information creating unit in the program broadcasting system in embodiment 2.
Fig. 12 is a flow diagram showing the operation at the time of urgent change of program element transmitting schedule in the program guide information creating unit in the program broadcasting system in embodiment 2.
Fig. 13 is a diagram showing an example of program element transmitting schedule in the process of transmission.
Fig. 14 is a diagram showing an example of program element transmitting schedule of urgent change.
Fig. 15 is a diagram showing data structure of version management table in the program broadcasting system in embodiment 2.
Fig. 16 is a diagram showing an example of transmitting schedule before change.
Fig. 17 is a diagram showing an example of transmitting schedule before change.
Fig. 18 s a diagram showing a correspondence table of program element identifier and event ID.
Fig. 19 is a diagram showing an example of version number management table for managing in a synchronism checking unit 73 in a program broadcasting system in embodiment 3.
Fig. 20 is a diagram showing an example of version number management table for managing in a synchronism checking unit 83 in the program broadcasting system in embodiment 3.
Fig. 21 is a diagram showing the difference of version numbers between the synchronism checking unit 83 and synchronism checking unit 73.
Fig. 22 is a diagram showing a synchronizing method of version numbers in the program broadcasting system in embodiment 3.
Fig. 23 is a block diagram showing a constitution of a conventional program broadcasting system.

### Detailed Description of the Exemplary Embodiments

Referring now to the drawings, preferred embodiments of the invention are described in detail below.

### Embodiment 1

Embodiment 1 relates to a program broadcasting system for creating a program frame of program guide information, or deleting the program guide information so that the quantity of data of program guide information may be sent out below a specified transmission speed, which is described by reference to the accompanying drawings.

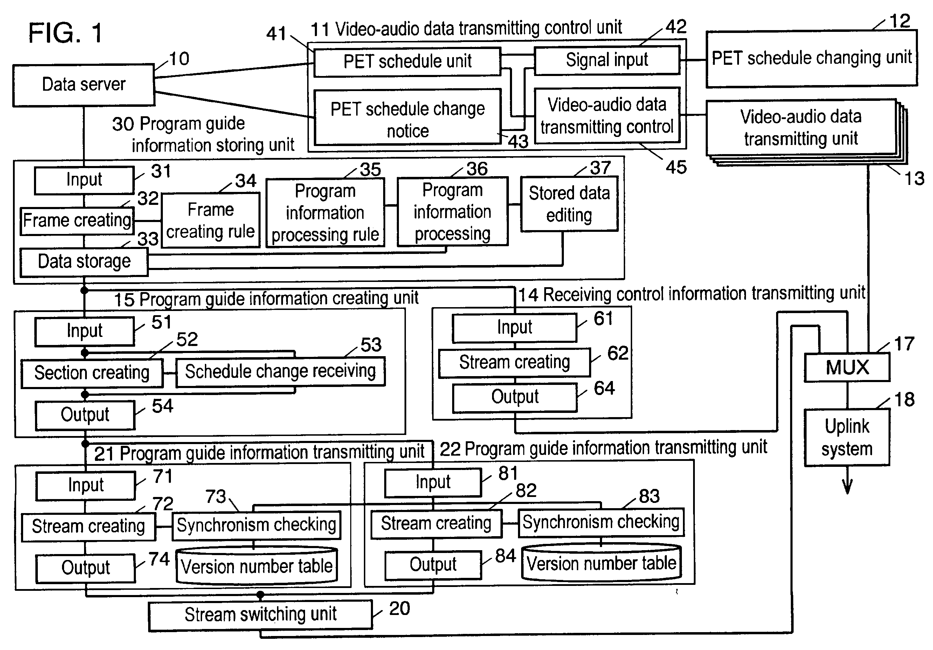

Fig. 1 shows a constitution of the broadcasting system of embodiment 1.

The broadcasting system of embodiment 1 comprises:
(a) a data server 10 for managing program information (program name, start time, duration, cast, synopsis of program, etc.) identified with program element identifier, program element transmitting schedule (hereinafter called simply PET schedule), and receiving control information which is PSI (program specific information) of MPEG2,
(b) a video-audio data transmitting unit (hereinafter called simply VAT unit) 13 in which video and audio of programs are stored,
(c) a video-audio data transmitting control unit (hereinafter called simply VATC unit) 11 for controlling transmission of video and audio by instructing output of video and audio corresponding to the program element identifier to the VAT unit 13 according to the PET schedule,
(d) a PET schedule changing unit 12 for changing the PET schedule,
(e) a program guide information storing unit (hereinafter called simply PGIS unit) 30 for creating the program frame of program guide information, and adjusting the quantity of data of program guide information so as to be sent out below a specified transmission speed,
(f) a receiving control information transmitting unit (hereinafter called simply RCIT unit) 14 for sending out receiving control information section data (hereinafter called simply RCI section data) of the receiving control information of the program to be on-air,
(g) a program guide information creating unit (hereinafter called simply PGIC unit) 15 for acquiring program information from the data server, creating program guide information, and processing the program guide information into program guide information section data (hereinafter called simply PGI section data),
(h) duplexed program guide information transmitting units (hereinafter called simply PGIT units) 21, 22 for sending out the PGI section data,
(i) a stream switching unit 20 for selecting one out of the PGIT units 21, 22,
(j) a multiplexer (hereinafter called simply MUX) 17 for multiplexing video, audio, RCI section data, and PGI section data, and
(k) an uplink system 18 for transmitting multiplexed data.

The PGIS unit 30 includes:
(a) an input unit 31 for receiving information from the data server 10,
(b) a frame creating unit 32 for creating a program frame necessary for creating SI (service information) of DVB/SI standard which is program guide information from the PET schedule, assigning the event ID in the program frame, and creating a correspondence table of program element identifier and event ID,
(c) a frame creating rule storage unit 34 for storing the rule for creating the program frame,
(d) a stored data editing unit 37 for editing in order to feed program guide information into the created program frame,
(e) a program guide information processing unit 36 for processing the program guide information so as to be sent out below a specified transmission speed,
(f) a program guide information processing rule storage unit 35 for storing the rule for this processing, and
(g) a data storage unit 33 for storing the program guide information adjusted in the quantity of data and the created correspondence table of program element identifier and event ID, or storing the program guide information of each program element identifier entered from the data server 10, receiving control information, and PET schedule.

Next, the operation until the program frame of this program broadcasting system is created is mainly described below.

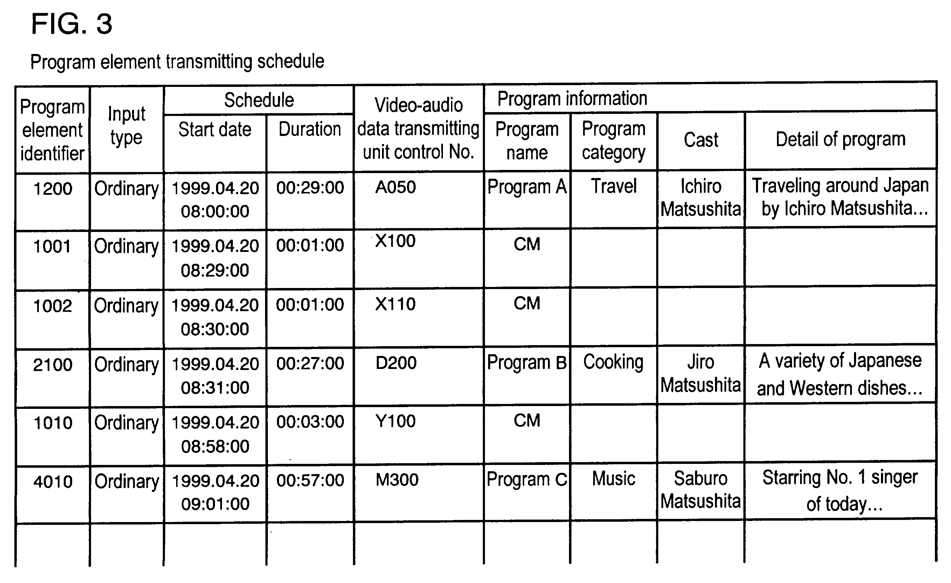

As shown in Fig. 3, the data server 10 is managing the PET schedule of the program element. The PET schedule is composed of the program element identifier, type of input, on-air schedule, video-audio data transmitting unit control number, and program information. Of the program elements, the program and the commercial (hereinafter called simply CM) are distinguished from each other. In order that the program and CM can be individually identified, the program and CM are provided with individual program element identifiers. In each program element identifier, the on-air duration, video-audio data transmitting unit control number, program name, synopsis and other program information are set.

The frame creating unit 32 creates, from the above PET schedule, a program frame for program list for presenting program guide information (such as the television program guide of newspaper). That is, the frame creating unit 32 creates a program frame for a program only.

Accordingly, the frame creating unit 32 creates a program frame
(a) on the basis of the PET schedule acquired from the data server 10 through the input unit 31,
(b) by incorporating the PET schedule of the CM into the schedule of the program according to the rule stored in the frame creating rule storage unit 34.

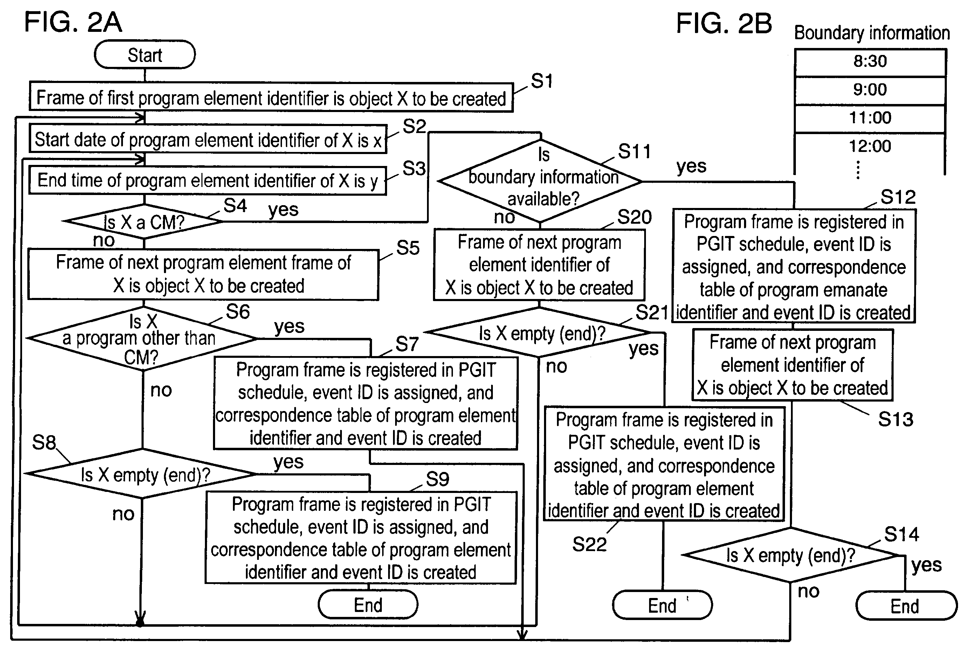

Fig. 2A shows an example of rule stored by the frame creating rule storage unit 34. Fig. 2B shows an example of information of boundary of the program frame referred to by the frame creating rule storage unit 34 and next program frame (hereinafter called simply boundary). This boundary information is set by the provider. Referring to the flow in Fig. 2A, the operation of the frame creating unit 32 is described below.
Step 1: A first program element identifier is supposed to be an object X to be created of the program frame,
Step 2: The start time of frame of X is registered as start time x of program frame, and
Step 3: The end time of frame of X (or start time of next program element) is registered as end time y of program frame.
Step 4: Judging if the program element identifier is program or CM,
Step 5: If not CM, the next program element identifier is the object X for creating a frame,
Step 6: Judging if the X is CM or empty (end),
Step 7: If not CM or empty, a program frame is created from x and y, and registered. Or, same event ID is assigned to each program element identifier included between x and y, and a correspondence table of program element identifier and event ID is created.
Step 8: If CM or empty at step 6, the program element identifier is judged if empty (end) or not,
Step 9: If empty, the same process as at step 7 is executed, thereby terminating. If not empty but CM, the process goes back to step 3 and continues.
Step 11: If the object X is CM at step 4, it is judged whether the boundary is registered or not in the boundary information (Fig. 2 (b)) at the end time of X (or before end time).
Step 12: If boundary information is set, the same process as at step 7 is executed,
Step 13: The next program element identifier of X is supposed to be the object X for creating a frame,
Step 14: If the object X is empty, the process is over, and if not empty, returning to step 2, the process continues.
Step 20: At step 11, if the boundary information is not set, the next program element identifier of X is supposed to be the object X,
Step 21: Judging if X is empty or not,
Step 22: If X is empty, the same process as at step 7 is executed, and the process is over. If not empty, returning to step 3, the process continues.

Referring to the PET schedule in Fig. 3, the procedure for creating a program frame according to the rule is explained below.

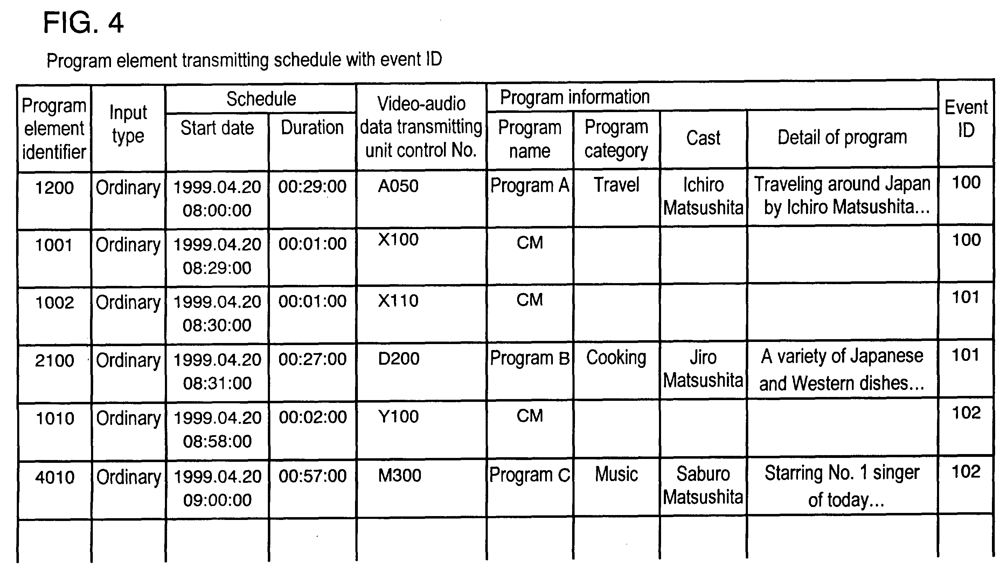

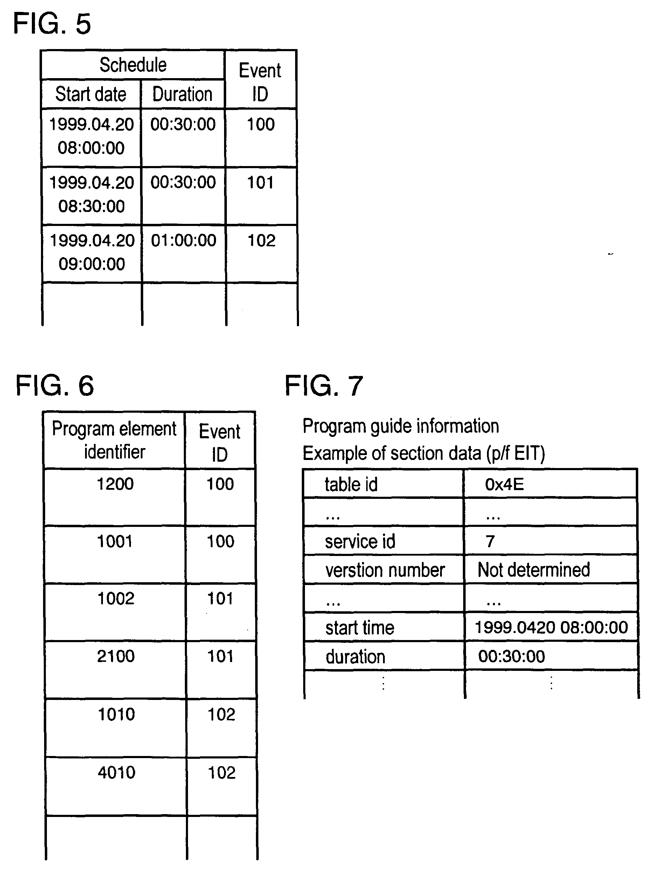

In the PET schedule in Fig. 3,
(a) The first program element identifier (program A) is supposed to be X (step 1),
(b) At step 2, the start time of X, 8:00, is set as start time x of the program frame.
(c) At step 3, the end time of X, 8:29, is set as end time y of the program frame.
(d) At step 4, since X is not CM,
(e) At step 5, CM of the next program element identifier of X is supposed to be X.
(f) At step 6, since X is a CM, it is checked if empty or not at step 8.
(g) In this case, not empty, returning to step 3, the process for creating frame continues.
   Herein, X is a CM of which start time is 8:29 and end time is 8:30,x is 8:00, and y is 8:29.
(h) At step 3, the end time of X, 8:30, is supposed to be y.
(i) At step 4, since X is a CM,
(j) At step 11, the boundary information is referred to. In the boundary information, as shown in Fig. 2B, the time of the boundary is registered. If the time of the boundary exists at the end time of X or until the end time, the process goes to step 12.
(k) Since the boundary time of 8:30 is registered in Fig. 2B, going to step 12, the program frame of program element identifier 1200 between x and y, where x is 8:00 and y is 8:30, is registered.
(l) A program guide information transmitting schedule (PGIT schedule) is created as shown in Fig. 5, and the event ID is assigned in each program frame as shown in Fig. 5.
(m) As shown in Fig. 4, the same event ID is assigned to the program element identifiers included between x and y.
(n) The PET schedule is updated,
(o) Or the correspondence table of program element identifier and event ID is created as shown in Fig. 6.

The creation is thus continued, and the PGIT schedule, PET schedule, and correspondence table of program element identifier and event ID are completed. The PGIT schedule, PET schedule, and correspondence table of program element identifier and event ID are stored in the data storage unit 33. At the same time, the PGIT schedule, PET schedule, and correspondence table of program element identifier and event ID are transferred to the PGIC unit 15.

The creation rule of the program frame to be registered in the frame creation rule storage unit 34 may be a different one. For example, the program frame is created by the rule of skipping the CM and comprising only the start time and end time of the program except for the CM. In this case, the skipped CM is a blank, and if necessary, this blank is edited by the stored data editing unit 37. Or, in the event of a blank, another rule may be applied for creating by including the blank in the immediately preceding (or succeeding) program in the on-air sequence. In a different rule, for example, after storing the data including the blank, several boundaries (for example, 0 minute, 10 minutes, 15 minutes, 20 minutes) are registered, and the time zone earlier than the boundary is included in the event before this time, and the time zone later than the boundary may be included in the later event, and the program frame is created according to such rule.

When recognizing the program at step 4, or the like, if the on-air time is shorter than a specified time (for example, within 5 minutes), it may be handled as a CM, so that the number of programs can be decreased, and the program guide information to be created may be decreased in quantity.

Alternatively, several creation rules of program frame may be set in the frame creation rule storage unit 34, and one of them may be selected when creating a program frame.

The stored data editing unit 37 acquires the program frame registered in the data storage unit 33, and the program information suited to the frame is entered or edited. The information to be entered or edited is the program name, cast, synopsis, detail of program, change time of program frame, etc.

The program guide information processing unit 36 processes so that the quantity of data of the program guide information created in the stored data editing unit 37 may be sent out below a specified transmission speed, by applying the rule registered in the program guide information processing rule storage unit 35.

The program guide information processing rule storage unit 35 stores the following rules:
(1) Deletion of program detail information in the sequence of the remoter date from the present time, in the start date of the program frame of program guide information
(2) Deletion of programs in the sequence of the remoter date from the present time, in the start date of the program frame of program guide information
(3) Deletion of programs short in on-air time in the sequence of the remoter date from the present time, in the start date of the program frame of program guide information
(4) Deletion of other programs than recommended in the sequence of the remoter date from the present time, in the start date of the program frame of program guide information
(5) Deletion except for prime time (18:00 to 21:00) in the sequence of the remoter date from the present time, in the start date of the program frame of program guide information

In these rules, the priority of deletion is higher in the program earlier in the sequence. The program guide information processing unit 36 processes the program guide information created in the stored data editing unit 37 by:
(a) First curtailing the quantity of data by applying the rule (1),
(b) Further curtailing the quantity of data by applying the rule (2) if exceeding the quantity of data that can be sent out below the specified transmission speed, and
(c) Applying the rule (3) if not yet settling within the specified quantity of data.

In this way, the rules are sequentially applied until the quantity of data of program guide information settles within the specified quantity. The program guide information settling within the specified quantity of data is registered in the data storage unit 33.

The rules to be registered in the program guide information processing rule storage unit 35 are not limited to these alone, but may be freely changed. For example, the program guide information processing rule storage unit 35, in the adjustment stage before the transmitting date of the program guide information, does not curtail the data if exceeding the quantity of data to be sent out below the specified transmission speed, but returns the warning to the data server 10. The program guide information processing rule storage unit 35 edits by applying these rules before the transmitting time.

Thus, in the program broadcasting system of the embodiment, the most important program frame for creating program guide information can be created from the PET schedule. The quantity of data of the program guide information can be adjusted so as to be sent out below the specified transmission speed.

In Fig. 1, the PGIS unit 30 is shown independently from the data server 10, but this PGIS unit 30 may also exist as part of the data server 10.

This program broadcasting system operates as follows.

The PGIC unit 15 processes the program guide information registered in the data storage unit 33 into data of a section format as shown in Fig. 7, and issues to the PGIT units 21, 22.

Herein, in the radio wave industrial standard ARIB STD-B10, SDT (service description table) and EIT (event information table) are defined as the tables to be transmitted in MPEG2 Section. The table ID is the identifier of these tables. The table is composed of plural sub-tables having the same table ID, and each sub-table is identified by the sub-table ID. Incidentally, the present/following-EIT (p/f-EIT) is the table describing the event name, start time, duration, and others about the present and following programs.

The PGIT units 21, 22 assign the PGI section data with version number, form into MPEG2 TS packet, and send out repeatedly at specific time intervals according to the PGIT schedule.

The stream switching unit 20 selects an output from one of the PGIT units 21, 22, and issues to the multiplexer 17.

At this time, the stream switching unit 20, if transmission from the program guide information transmitting unit being presently selected is interrupted for a specific time, changes over to other program guide information transmitting unit, and issues to the multiplexer 17.

The RCIT unit 14 acquires the receiving control information registered in the data storage unit 33, and converts into RCI section data.

The RCI section data is formed into MPEG2 TS packet, and sent out.

The VATC unit 11 instructs output of TV-program data (video, audio) sent out from the VAT unit 13, according to the PET schedule acquired from the data server 10.

The TS packet of TV-program data and RCI section data and TS packet of PGI section data are multiplexed in the MUX 17, and transmitted from the uplink system 18.

The detail of the PGIC unit 15, PGIT units 21, 22, and VATC unit 11 is described in the following embodiments.

### Embodiment 2

Embodiment 2 relates to a program broadcasting system capable of reacting quickly when the PET schedule is changed.

In this system, as shown in Fig. 1, the VATC unit 11 comprises:
(a) a PET schedule unit 41 for acquiring PET schedule from the data server 10,
(b) a signal input unit 42 for receiving the signal from the PET schedule changing unit 12,
(c) a PET schedule change notice unit 43 for noticing change of PET schedule to the data server 10, and
(d) a video-audio data transmitting control unit 45 for controlling transmission of video and audio data from the VAT unit 13 according to the PET schedule.

The RCIT unit 14 comprises:
(a) an input unit 61 for receiving the receiving control information from the data storage unit 33 of the PGIS unit 30,
(b) a stream creating unit 62 for creating receiving control information stream by creating RCI section data and forming the RCI section data into MEPG2 packet, and
(c) an output unit 64 for issuing the created receiving control information stream.

The PGIC unit 15 comprises:
(a) an input unit 51 for acquiring program guide information and PGIT schedule at every specific time from the data storage unit 33 of the PGIS unit 30,
(b) a section creating unit 52 for creating and storing PGI section data and PGIT schedule (start time, end time) separately, and issuing each to an output unit 54,
(c) a schedule change receiving unit 53 for receiving change notice of PGIT schedule when the PET schedule is changed, changing the PGIT schedule, and issuing to the output unit 54, and
(d) the output unit 54 for issuing the PGI section data and PGIT schedule.

The PGIT units 21, 22 comprise:
(a) input units 71, 81 for receiving PGI section data and PGIT schedule from the PGIC unit 15,
(b) stream creating units 72, 82 for managing the entered PGI section data and PGIT schedule separately, acquiring version numbers from synchronism checking units 73, 83, attaching the version numbers to the PGI section data to form into MPEG2 TS packet, and issuing according to the PGIT schedule,
(c) the synchronism checking units 73, 83 for storing version number management tables 75, 85 of program guide information section, checking the version numbers of the PGI section data being sent out, and synchronizing them, and
(d) output units 74, 84 for repeatedly issuing TS packets of PGI section data.

The VATC unit 11 in this system
(a) acquires PET schedule in the unit of, for example, one day from the data server 10 in ordinary operation,
(b) issues the video-audio data transmitting unit control signal to the VAT unit 13 according to the PET schedule from the video-audio data transmitting control unit 45, and
(c) controls the transmission of TV-program data (video, audio) from the VAT unit 13.

The RCIT unit 14
(a) acquires receiving control information from the data storage unit 33 of the PGIS unit 30,
(b) creates RCI section data from the receiving control information by the stream generating unit 62,
(c) creates a stream by forming the RCI section data in MPEG2 packet,
(d) stores and manages the created stream, and
(e) sends out to the multiplexer 17 through the output unit 64.

In the PGIC unit 15, usually,
(a) the input unit 51 acquires
   - PET schedule (Fig. 4) of program element including program guide information,
   - PGIT schedule (Fig. 5) of program guide information, and
   - correspondence table of program element identifier and event ID (Fig. 6)
      from the data storage unit 33 of the PGIS unit 30 at every specific time,
(b) the section creating unit 52 stores such data,
(c) the correspondence table of program element identifier and event ID is stored also in the schedule change receiving unit 53,
(e) the section creating unit 52 creates PGI section data (Fig. 7) from the PET schedule including the program guide information, and
(f) the PGI section data and PGIT schedule are stored in the section creating unit 52, and issued to the PGIT units 21, 22 through the output unit 54.

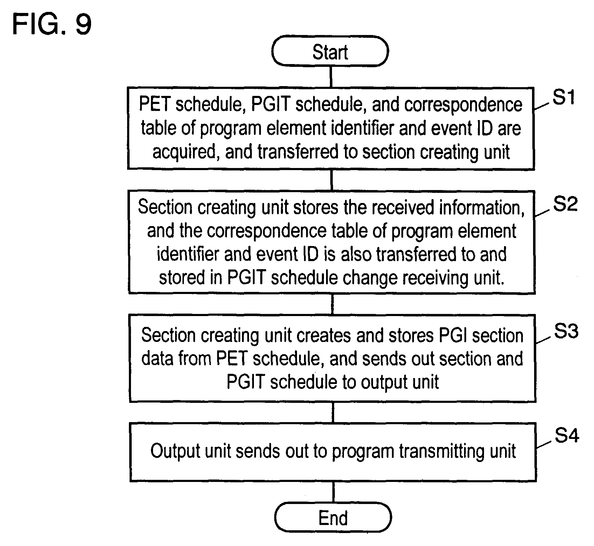

The ordinary operation of the PGIC unit 15 is explained in the flowchart in Fig. 9.
Step 1: PET schedule including program guide information, PGIT schedule, and correspondence table of program element identifier and event ID are acquired from the data storage unit 33 of the PGIS unit 30, at every specific time, through the input unit 51, and transferred to the section creating unit 52.
Step 2: The section creating unit 52 stores the acquired PET schedule, PGIT schedule, and correspondence table of program element identifier and event ID, and the correspondence table of program element identifier and event ID is also transferred and stored in the schedule change receiving unit 53.
Step 3: The section creating unit 52 creates PGI section data as shown in Fig. 7 from the PET schedule including program guide information, and stores, and transfers the PGI section data and PGIT schedule to the output unit 54.
Step 4: The output unit 54 sends out the transferred PGI section data and PGIT schedule to the program guide information transmitting unit 21.

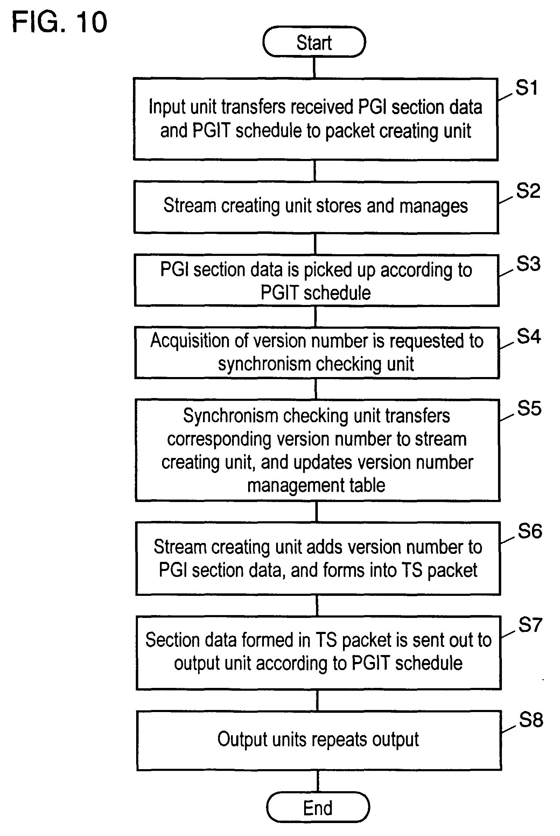

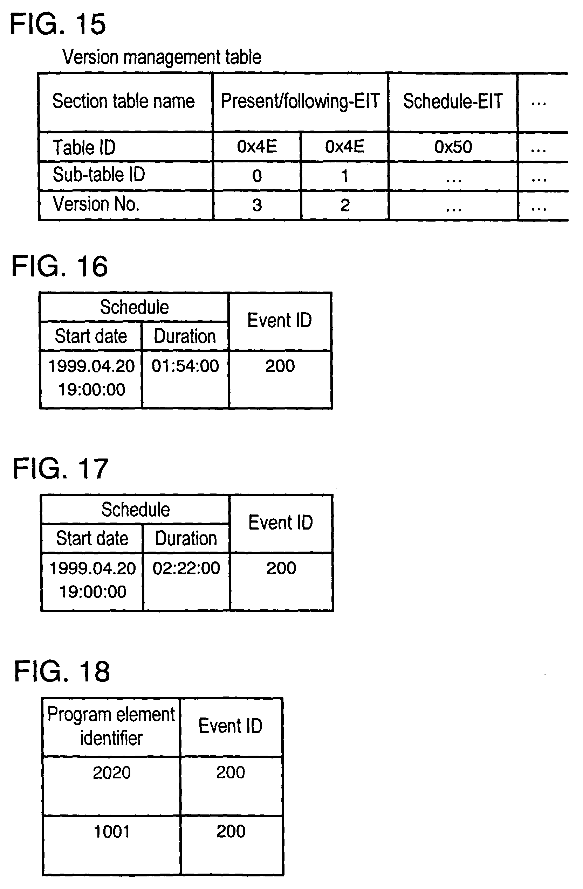

The operation of the PGIT units 21, 22 is described below according to the flowchart in Fig. 10.
Step 1: The input unit 71 of the program guide information transmitting unit 21 transfers the received PGI section data and PGIT schedule to the stream creating unit 72.
Step 2: The stream creating unit 72 stores and manages them.
Step 3: The stream creating unit 72 takes out the PGI section data according to the PGIT schedule.
Step 4: Acquisition of version number to be given to the PGI section data to be sent out is requested to the synchronism checking unit 73. At this time, the table ID and sub-table ID of the PGI section data are designated.
Step 5: The synchronism checking unit 73 transfers the version number corresponding to the section requested from the version number management table shown in Fig. 15 for managing the version numbers in each table ID and sub-table ID, to the stream creating unit 72. At the same time, the corresponding version number in the version number management table is incremented by one each.
Step 6: The stream creating unit 72 gives the version number acquired from the synchronism checking unit 73 into the PGI section data taken out at step 3, and forms into MEPG2 TS packet.
Step 7: The stream creating unit 72 sends the corresponding program guide information section made in TS packet form to the output unit 74 at the start time of PGIT schedule.
Step 8. The output unit 74 sends out the received TS packet repeatedly. When a new TS packet is received, only the portion corresponding to the new TS packet is updated, and it is sent out repeatedly.

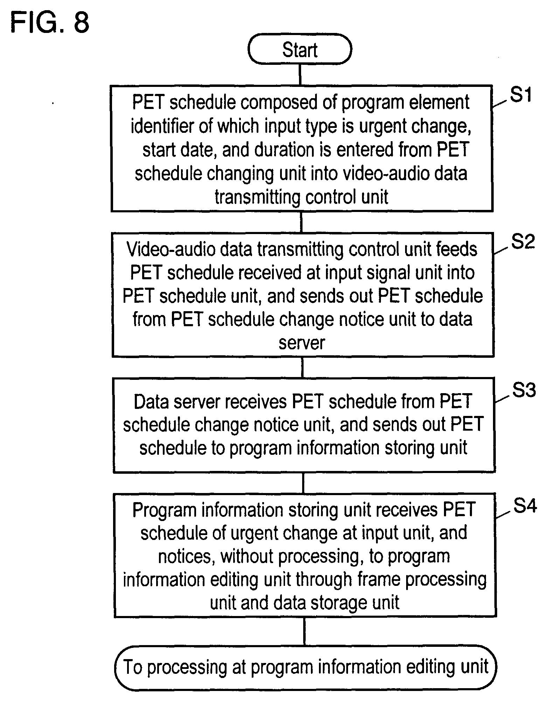

Next, in the event of an urgent change of program, the operation of the program broadcasting system is described by referring to Fig. 8.
Step 1: First of all, PET schedule of urgent change is noticed from the PET schedule changing unit 12 to the VATC unit 11. This PET schedule of urgent change includes the program element identifier of the program element subject to urgent change of PET schedule, input type showing urgent change, updated start time, and duration.
Step 2: The signal input unit 42 receives the PET schedule of urgent change, and updates the PET schedule of the PET schedule unit 41 coinciding in the program element identifier, and issues the PET schedule of urgent change to the PET schedule change notice unit 43.
Step 3:: The PET schedule change notice unit 43 receives the PET schedule of urgent change, and notices the PET schedule of urgent change to the data server 10.
Step 4: The data server10 receives the PET schedule of urgent change, and registers the PET schedule of urgent change in the PGIS unit 30.
Step 5: The input unit 31 of the PGIS unit 30 confirms that the input type of the entered PET schedule is an urgent change, and notices the PET schedule to the PGIC unit 15 through the frame creating unit 32 and data storage unit 33. At this time, nothing particular is done at the frame creating unit 32 and data storage unit 33.

Meanwhile, the PET schedule can be also changed in the data server 10. The PET schedule changed in the data server 10 is sent to the VATC unit 11, and further sent to the PGIS unit 30, and a nearly same operation is conducted.

In the event of urgent change of PET schedule, the operation of the PGIC unit 15 and PGIT units 21, 22 is explained below.

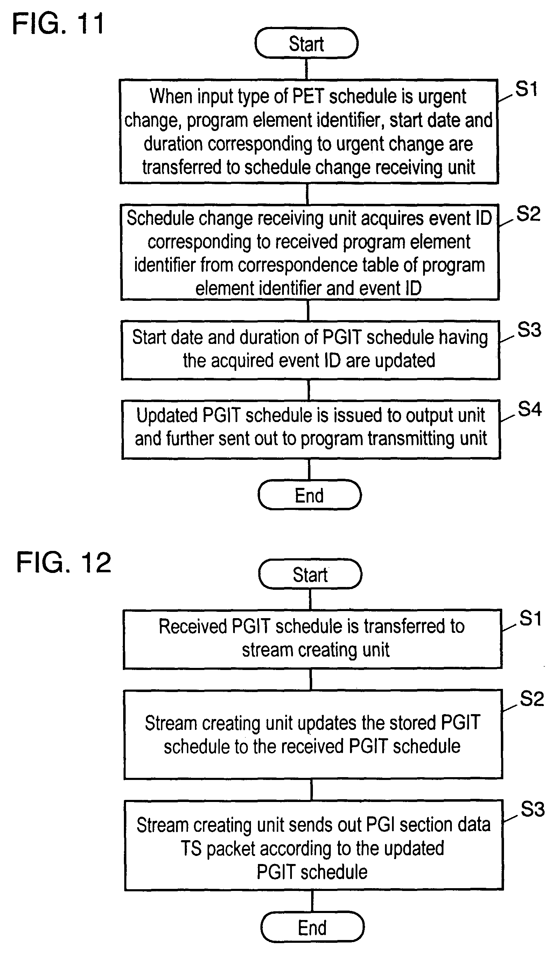

First, the PGIC unit 15 is described according to the flowchart in Fig. 11.
Step 1: When the input type of the received PET schedule is an urgent change, the input unit 51 of the PGIC unit 15 transfers the program element identifier of the PET schedule, start time and duration to the schedule change receiving unit 53.
Step 2: The schedule change receiving unit 53 receives the program element identifier, start date and duration, and acquires the event ID corresponding to the received program element identifier from the correspondence table of program element identifier and event ID.
Step 3: The schedule change receiving unit 53 updates the start date and duration of the PGIT schedule having the same event ID as the event ID acquired at step 2.
Step 4: The updated PGIT schedule is sent from the output unit 54 to the program guide information transmitting unit 21.

The operation of the program guide information transmitting unit 21 is explained by referring to the flowchart in Fig. 12.
Step 1: The input unit 71 of the program guide information transmitting unit 21 receives the updated PGIT schedule, and transfers it to the stream creating unit 72.
Step 2: The stream creating unit 72 updates the stored PGIT schedule to the received PGIT schedule.
Step 3: The stream creating unit 72 sends out repeatedly the PGI section data in packet format from the output units 74, 84 according to the updated PGIT schedule.

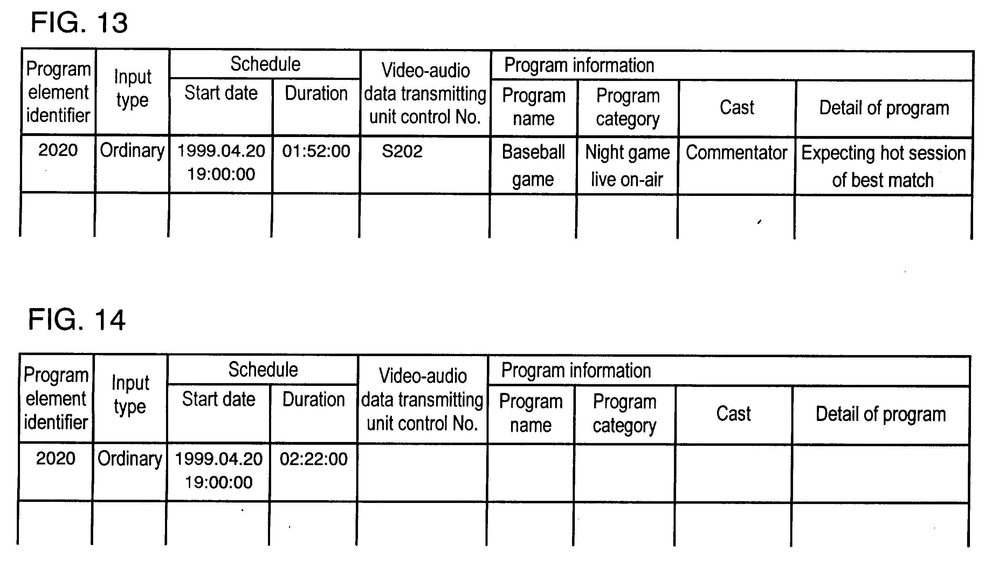

An example of extension of on-air baseball game program by 30 minutes as shown in Fig. 13 by operation of the PET schedule changing unit 12 is described by referring to Fig. 8, Fig. 11 and Fig. 12.

The PGIT schedule and the correspondence table of program element identifier and event ID are supposed to be as shown in Fig. 16 and Fig. 18, respectively.

When the PET schedule of urgent change as shown in Fig. 14 is entered in the PET schedule change notice unit 43 of the VATC unit 11 from the PET schedule changing unit 12,
(a) The VATC unit 11 sends out the received PET schedule to the data server 10.
(b) The PET schedule of urgent change issued to the data server 10 is transmitted to the PGIC unit 15 from the data server 10 through the PGIS unit 30.

The PET schedule can be also changed in the data server 10, and when changed in the data server 10, the operation is the same. In this example, there is one program of urgent change, but it is possible also in the case of plural programs.

When the input unit 51 of the PGIC unit 15 confirms that the input type of the PET schedule is an urgent change, the PGIC unit 15
(a) transfers this PET schedule to the schedule change notice unit 53.
(b) The schedule change notice unit 53 acquires the event ID corresponding to the program element identifier of the received PET schedule, from the correspondence table of program element identifier and event ID shown in Fig. 18.
(c) The start date and duration of the PGIT schedule (Fig. 16) having the event ID are updated according to the duration of the received PET schedule (Fig. 17).

Next, the updated PGIT schedule is transferred to the output unit 54, and the output unit 54 sends it to the PGIT units 21, 22.

The input units 71, 81 of the PGIT units 21, 22 receive the updated PGIT schedule, and transfer the PGIT schedule to the stream creating units 72, 82.

The stream creating units 72, 82 issue the PGI section data in PS packet format according to the updated PGIT schedule. The output processing is same as the ordinary operation of the PGIT units 21, 22.

Thus, when the PET schedule is changed, this system sends out the program element identifier, start date of PET schedule, and duration. As a result, the system can update the information transmitted from the PGIT units 21, 22. Therefore, it is not necessary to newly create the PGI section data, and prompt processing is realized.

Moreover, the section creating unit 52 or the stream creating units 72, 82 may also update the PGI section data having the event ID coinciding with the event ID of the PGIT schedule changed in the start time and duration.

### Embodiment 3

Embodiment 3 relates to a synchronizing method of version numbers of PGI section data sent out from the PGIT units 21, 22.
(a) When PGIT schedule and PGI section data are sent from the PGIC unit 15 to the PGIT units 21, 22, the input units 71, 81 receive them, and transfer to the stream creating units 72, 82.
(b) The stream creating units 72, 82 acquire the PGI section data, and request acquisition of version numbers corresponding to the PGI section data to the synchronism checking units 73, 83.
(c) The synchronism checking units 73, 83, when receiving the version number acquisition request, acquire the version numbers corresponding to the requested PGI section data from the version number management tables 75, 85 being managed, and notice to the stream creating units 72, 82, and, after noticing, increment the version numbers of the corresponding section of the version number management tables by one only.
(d) The stream creating units 72, 82, when acquiring the version numbers corresponding to the PGI section data from the synchronism checking units 73, 83, provide the PGI section data with the version numbers and store, and form the PGI section data in MPEG2 TS packet, and issue to the output units 74, 84 according to the PGIT schedule.
(e) The output units 74, 84 issue the received TS packet repeatedly to the stream switching unit 20.

Herein, the synchronizing process of version numbers by the synchronism checking units 73, 83 is described below.

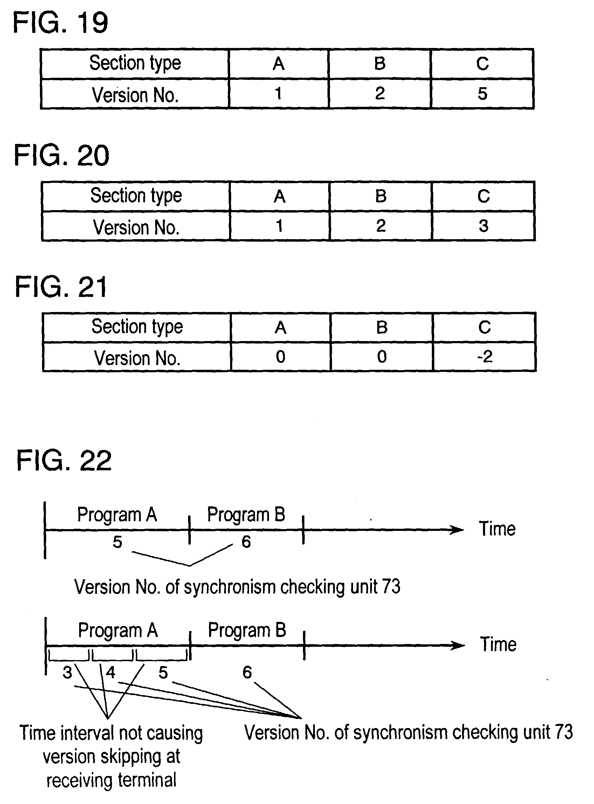

Suppose the version number management table managed by the synchronism checking unit 73 to be shown in Fig. 19, and the version number management table managed by the synchronism checking unit 83, in Fig. 20. Herein, the section type is intended to distinguish MPEG2 Section (= sub-table), and it is specified in MPEG2 to provide each section with version number.
(a) The synchronism checking units 73, 83 transfer the version number management tables 75, 85 recording the version numbers of each section data at the present mutually to the other synchronism checking units 83, 73.
   Herein, assume that the version number management table (Fig. 19) of the synchronism checking unit 73 is transferred to the synchronism checking unit 83.
(b) The synchronism checking unit 83, when the version number of the own version number management table is smaller than the value in the other version number management table (section type A in Fig. 21), operates as follows as shown in Fig. 22 by:
   · incrementing the version number by one each at transmission period intervals that can be followed by the receiver, until reaching the value of the other version number management table,
   · acquiring the corresponding PGI section data from the stream creating unit 82, and
   · updating the version number and transferring to the output unit 84.
(c) The output unit 84 sends out the PGI section data provided with the updated version number.

By repeating this operation, mutual disagreement of version numbers can be corrected.

In the event of failure of program guide information transmitting unit, the method of restoring while synchronizing is described below.

If one program guide information transmitting unit 21 is down, when restarting,
(a) The synchronism checking unit 83 of the other program guide information transmitting unit 22 transfers the version number management table being presently managed to the synchronism checking unit 73 of the program guide information transmitting unit 21 being restarted.
(b) The synchronism checking unit 73 of the restarted program guide information transmitting unit 21 can operated thereafter as usual by using the data in the received version number management table.

Therefore, when one program guide information transmitting unit is down, in this way, deviation in synchronism can be prevented without newly synchronizing by resetting the version numbers.

If the program guide information transmitting units are triple or more, the same effects are obtained by:
(a) transferring the version number management tables sequentially from one program guide information transmitting unit to next program guide information transmitting units, or
(b) sending the version number management table to all other program guide information transmitting units than the own one.

The same holds true in the receiving control information transmitting units, and the receiving control information transmitting units can be synchronized by providing the data management units of the receiving control information transmitting units with synchronism checking units.

Thus, by synchronizing the version numbers of the program guide information, disagreement of version numbers can be prevented in the system of the invention, and the program guide information can be updated stably in the receiver.

As clear from the description herein, the program broadcasting system of the invention can automate the creation of program frame when creating program guide information, or processing job so as to send out the program guide information below a specified transmission speed.

Besides, in the event of change of PET schedule, the program guide information can be sent out promptly.

It is also possible to avoid disagreement of version numbers between plural program guide information transmitting units multiplexed in order to avoid interruption of data transmission, so that the program guide information can be updated stably in the receiver.

## Claims

1. A program broadcasting system for multiplexing and broadcasting TV-program data and program guide information comprising:
a program frame creating unit for creating a program frame of program guide information from one or more program element transmitting schedules for composing a program, and
a frame creating rule storage unit for storing the rule for creating the program frame of said program guide information,
wherein said program frame creating unit creates said program frame according to the rule stored in said frame creating rule storage unit.

2. A program broadcasting system of claim 1, wherein said frame creating rule storage unit stores the rule for creating said program frame according to the boundary information of the program.

3. A program broadcasting system of claim 1, wherein said frame creating rule storage unit stores the rule for creating said program frame according to a blank in the program element transmitting schedule of adjacent program elements.

4. A program broadcasting system of claim 1, wherein said frame creating rule storage unit stores the rule for creating said program frame according to the on-air time of the program element.

5. A program broadcasting system of claim 4, wherein said rule specifies that the program element of which on-air time is shorter than a specified time is handled as a CM.

6. A program broadcasting system of claim 1, further comprising:
a program guide information processing unit for processing said program guide information so as to be sent out below a specified transmission speed, and
a program guide information processing rule storage unit for storing the rule for processing the program guide information,
wherein said program guide information processing unit processes the program guide information so that the program guide information may be sent out below a specified transmission speed according to the rule stored in said program guide information processing rule storage unit.

7. A program broadcasting system of claim 6, wherein said program guide information processing rule storage unit stores the rule for processing the program guide information remotest from the present time in the program frame.

8. A program broadcasting system of claim 6, wherein said program guide information processing rule storage unit stores the rule for processing the program guide information lowest in importance.

9. A program broadcasting system of claim 6, wherein said program guide information processing rule storage unit stores the rule for processing the program guide information of which program frame is within a specified time.

10. A program broadcasting system of any one of claims 6, 7, 8 and 9, wherein the program guide information to be processed is deleted by the rule.

11. A program broadcasting system for multiplexing and broadcasting TV-program data and program guide information comprising:
a data server for storing program element transmitting schedule and program information corresponding to each other by program element identifier,
a program guide information creating unit for creating program guide information and transmitting schedule of said program guide information corresponding to each other by event identifier, from the program element transmitting schedule and program information, and
a program guide information transmitting unit for managing said program guide information and transmitting schedule independently, and sending out the corresponding program guide information according to said program guide information transmitting schedule.

12. A program broadcasting system of claim 11, wherein said program guide information transmitting schedule is composed of the program start date and duration information.

13. A program broadcasting system of claim 11, wherein said program guide information transmitting unit, when the program element transmitting schedule of a certain program element is changed, changes the independently managed program guide information transmitting schedule according to the changed program element identifier and program element transmitting schedule of that program element entered from the data server.

14. A program broadcasting system of claim 11, wherein said data server stores at least one of transmitting patterns composed of the program element identifier and program element transmitting schedule of at least one program element or more including the program element of which program element transmitting schedule is changed, and when the program element transmitting schedule is changed, the program guide information transmitting unit changes the independently managed program guide information transmitting schedule, on the basis of the program element identifier and program element transmitting schedule for composing the transmitting pattern entered from the data server.

15. A program broadcasting system for multiplexing and broadcasting program data and program guide information comprising:
a program guide information creating unit for creating program guide information section and transmitting schedule of this program guide information section corresponding to each other by program element identifier,
a program guide information transmitting unit for managing program guide information section and transmitting schedule independently, storing the version number indicating updating of contents of program guide information section, picking up a program guide information section having the same program element identifier according to said program guide information transmitting schedule, adding version number, and sending out repeatedly, and
a stream switching unit for switching the output of said program guide information transmitting unit,
wherein said program guide information transmitting unit is duplexed, and duplexed program guide information transmitting units mutually exchange the version numbers to be given to the program guide information section, and when the version number of the program guide information transmitting unit at the partner side is larger than the version number given by the program guide information transmitting unit of the own side, the program guide information transmitting unit of the own side continues to update the version number to be given to the program guide information section until coinciding with the version number of the program guide information transmitting unit of the partner side.

16. A program broadcasting system of claim 15, wherein said program guide information transmitting unit, when continuously updating the version number given to the program guide information section, sets so that the time interval for updating the version number to next version number may be more than a specific time.

17. A program broadcasting system of claim 15, wherein said program guide information transmitting unit manages the version numbers in every sub-table in the case plural pieces of program guide information composed one or more sub-tables.

18. A program broadcasting system of claim 15, wherein said program guide information transmitting units are composed in triple or more number, and said program guide information transmitting units, when mutually exchanging version numbers, transfer the version numbers to all other program guide information transmitting units.

19. A program broadcasting system of claim 15, wherein said program guide information transmitting units are composed in triple or more number, and said program guide information transmitting units, when mutually exchanging version numbers, transfer the version numbers to other program guide information transmitting units sequentially.

20. A program broadcasting system of claim 15, wherein when said program guide information transmitting unit is restarted, the program guide information transmitting unit at the partner side receives the given version number information and stores in its inside.
